# EUROPÄISCHE PATENTSCHRIFT

(11) **EP 0 421 929 B1**
(45) Veröffentlichungstag und Bekanntmachung des Hinweises auf die Patenterteilung: **23.02.1994**
(21) Anmeldenummer: 90810737.8
(22) Anmeldetag: 25.09.1990
(51) Int. Cl.: G02B 6/42

(54) **Vorrichtung zum Einkoppeln der Lichtenergie eines Laserstrahles in einen faseroptischen Lichtwellenleiter und Verfahren zum Justieren und Ueberwachen der Position des Endes des faseroptischen Lichtwellenleiters**
Apparatus for coupling light energy of laser beam into an optical fibre and method for aligning and monitoring the position of the termination of the optical fibre
Dispositif pour coupler l'énergie lumineuse d'un faisceau laser dans une fibre optique et procédé pour aligner et surveiller la position de l'extrémité d'une fibre optique

(30) Priorität: 03.10.1989 CH 3593/89
(43) Veröffentlichungstag der Anmeldung: 10.04.1991
(73) Patentinhaber: CIBA-GEIGY AG, 4002 Basel (CH)
(72) Erfinder: van den Bergh, Hubert, Dr., CH-1376 Goumoens-la-Ville (CH); Cornaz, Peter François, Prof., Dr., / (CH); Wagnières, Georges, CH-1095 Lutry (CH)

(56) Entgegenhaltungen:
- DE-A- 1 613 987
- US-A- 4 840 450
- PATENT ABSTRACTS OF JAPAN, Band 10, Nr. 195 (P-475)[2251], 9. Juli 1986; & JP-A-61 39 006

## Beschreibung

Die Erfindung betrifft eine Vorrichtung gemäß Anspruch 1 zum Einkoppeln der Lichtenergie eines Laserstrahles in einen faseroptischen Lichtwellenleiter, dessen unter Einsatz einer Fokussierlinsenanordnung angestrahltes Ende eine sich rechtwinklig zur Faserlängsachse erstreckende Stirnfläche aufweist und an einer entlang von drei Achsen positionierbaren Haltevorrichtung befestigt ist. Außerdem betrifft die Erfindung ein Verfahren gemäß Anspruch 2 zum Justieren und Überwachen der Position des von einem Laserstrahl zum Einspeisen von Lichtenergie angestrahlten Endes eines faseroptischen Lichtwellenleiters, das in einer in drei Achsenrichtungen verstellbaren Haltevorrichtung eingespannt und über eine Fokussierlinsenanordnung angestrahlt wird.

Es ist bekannt, einen Laserstrahl mit Hilfe einer Fokussierlinsenanordnung in das Stirnende eines multimodigen faseroptischen Lichtwellenleiters einzuspeisen. Dabei ist es notwendig, die Anordnung so zu justieren, daß der Laserstrahl auf die Stirnfläche des Kerns des faseroptischen Lichtwellenleiters trifft, um zu vermeiden, daß dessen Umgebung infolge einer fehlerhaften optischen Justierung erwärmt wird, wodurch das Lichtwellenleiterende mit seiner Ummantelung infolge der hohen auftretenden Temperaturen beschädigt würde. Das Reparieren derartig beschädigter Lichtwellenleiterenden ist insbesondere beim Einsatz eines Lasers im klinischen Bereich nur sehr umständlich und schwierig durchzuführen. Es ist bekannt, zur Justierung der optischen Anordnung das vom Laser wegweisende ausgangsseitige Ende des Lichtwellenleiters mit Licht zu beaufschlagen, um die zum Laser weisende Stirnfläche des Lichtwellenleiters zu beleuchten, siehe z.B. das Dokument JP-A-61 039 006.

Der Erfindung liegt die Aufgabe zugrunde, eine Vorrichtung zum Einkoppeln eines leistungsstarken Laserstrahles zu schaffen, die sich auf einfache Weise zuverlässig justieren läßt. Diese Aufgabe wird vorrichtungsmäßig durch den kennzeichnenden Teil des Anspruchs 1 und verfahrensmäßig durch den kennzeichnenden Teil des Anspruchs 2 gelöst.

Der Erfindung liegt die Erkenntnis zugrunde, daß ein Teil der in die Stirnfläche des Lichtwellenleiters eingekoppelten Lichtenergie am vom Laserstrahl entfernten Ende des Lichtwellenleiters reflektiert wird und die dem Laser zugewandte Stirnfläche von der Innenseite des Lichtwellenleiters her beleuchtet. Es ist daher möglich, die Stirnfläche mit Hilfe einer Abbildungsoptik auf einem Schirm abzubilden, wobei bei einer derartigen Abbildung gleichzeitig eine Abbildung des Leuchtfleckes erfolgt, den der Laserstrahl auf der Stirnfläche des Lichtwellenleiters erzeugt. Bei der erfindungsgemäßen Vorrichtung und dem erfindungsgemäßen Verfahren wird auf der Schirmfläche nach dem Einbringen des Strahlteilers und dem Justieren des Lichtwellenleiterendes einerseits ein Bild der Stirnfläche und andererseits ein Bild des Leuchtfleckes erzeugt, so daß es bei scharf eingestelltem Bild der Stirnfläche möglich ist, innerhalb dieses Bildes das Bild des Leuchtfleckes durch Betätigen der in drei Achsenrichtungen verstellbaren Haltevorrichtung zu verschieben. Dabei bleibt auf dem Schirm das Bild des helleren Leuchtfleckes stationär, während das Bild der etwas weniger hellen und größeren Stirnfläche radial verschiebbar ist. Durch ein axiales Verschieben des Lichtwellenleiters läßt sich die Position finden, bei der die Stirnfläche auf der Schirmfläche scharf abgebildet ist und der Leuchtfleck des aufgeweiteten Laserstrahles den gewünschten Durchmesser hat. Solange die Justierung in axialer Richtung noch unvollkommen ist, ist der Leuchtfleck des Laserstrahls entweder zu klein oder zu groß und das Bild der Stirnfläche noch unscharf.

Nachfolgend wird die Erfindung anhand der Zeichnung beschrieben. Es zeigen:
- Fig. 1: eine schematische Darstellung der optischen Komponenten der Vorrichtung zum Einkoppeln der Lichtenergie eines Laserstrahles gemäß der Erfindung und
- Fig. 2: einen vergrößerten Ausschnitt zur Veranschaulichung der Form des Laserstrahlbündels vor der Stirnfläche des Lichtwellenleiters und der Lage des Leuchtfleckes des Laserstrahls auf der Stirnfläche des mit Laserlicht zu beaufschlagenden faseroptischen Lichtwellenleiters.

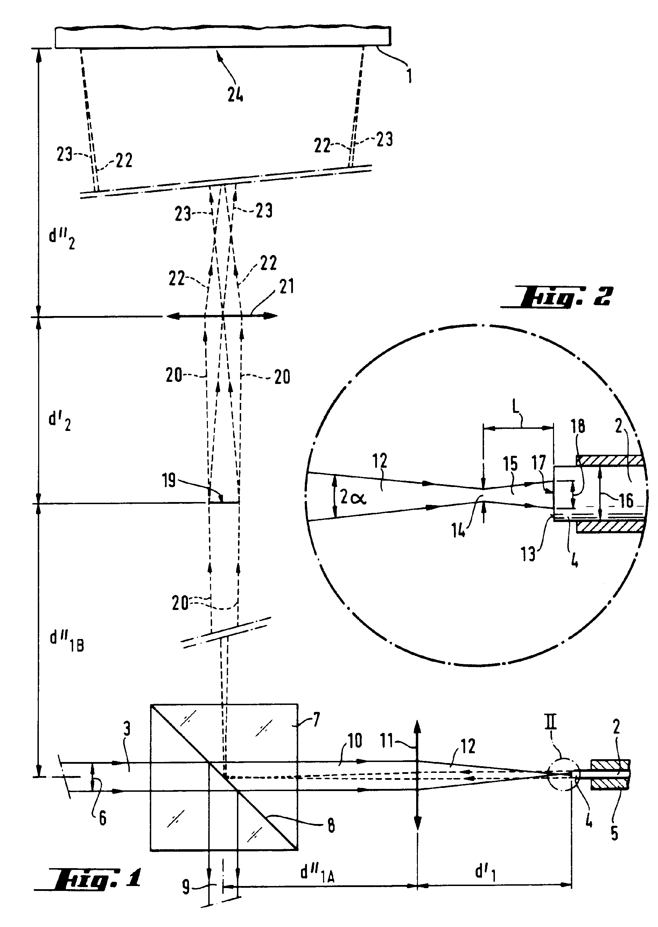

In Fig. 1 ist eine Vorrichtung zum Einkoppeln der Lichtenergie eines Laserstrahles in einen faseroptischen Lichtwellenleiter schematisch in einer Draufsicht entlang der Ebene eines Bildschirmes 1 dargestellt. Der mit seiner seitlichen Kante erkennbare Bildschirm 1 dient zum Beobachten der Justierung eines faseroptischen Lichtwellenleiters 2, der mit dem Licht eines Laserstrahles 3 eines in der Zeichnung nicht dargestellten Lasers beaufschlagt wird.

Wenn eine verhältnismäßig hohe Leistung benötigt wird, besteht die Gefahr, daß der Laserstrahl 3 wegen seiner hohen Energie den faseroptischen Lichtwellenleiter 2 bei unkorrekter Justierung beschädigt. Daher ist das angestrahlte Ende 4 des Lichtwellenleiters 2 in einer präzisen, in der Zeichnung schematisch dargestellten Haltevorrichtung 5 eingespannt , die in drei Achsenrichtungen verschiebbar ist. Wenn die Laserleistung gering ist, gestattet es die Vorrichtung, Energieverluste infolge einer ungeschickten Justierung zu vermeiden. Eine der drei Achsenrichtungen verläuft in Längsrichtung des angestrahlten Endes 4 des faseroptischen Lichtwellenleiters 2, während die beiden anderen Achsenrichtungen eine dazu sich rechtwinklig erstreckende Ebene aufspannen. Die Betätigung der Haltevorrichtung 5 erfolgt über mehrere Justierschrauben, die in der Zeichnung ebenfalls nicht dargestellt sind.

Zur Justierung der multimodigen faseroptischen Koppelvorrichtung gemäß Fig. 1 wird in den Strahlengang des Laserstrahls 3, dessen Durchmesser durch die Pfeile 6 veranschaulicht ist, ein Strahlteiler 7 nach dem Reduzieren der Laserlichtleistung in der in Fig. 1 dargestellten Weise eingebracht. Bei dem Strahlteiler 7 handelt es sich um einen Strahlteilerwürfel, dessen Reflexionsfläche 8 in einem Winkel von vorzugsweise 45 Grad zur Ausbreitungsrichtung des Laserstrahles 3 verläuft. Die Reflexionsfläche 8 erstreckt sich ebenso wie die Schirmfläche des Bildschirmes 1 rechtwinklig zur Zeichenebene der Fig. 1. Nach dem Justieren der Haltevorrichtung wird der Strahlteiler wieder aus dem Strahlengang herausgenommen, um einen Leistungsverlust infolge des Auskoppens zu vermeiden.

Wenn der nur während des Justiervorganges erforderliche Strahlteiler 7 sich im Strahlengang des Laserstrahls 3 befindet wird ein Teil des Laserstrahls 3 als Verluststrahlbündel 9 ausgekoppelt. Nach dem Durchqueren des als Strahlteilerwürfel ausgebildeten Strahlteilers 7 gelangt das in seiner Intensität etwas reduzierte Laserstrahlbündel 10 über eine schematisch dargestellte Fokussierlinsenanordnung 11 als fokussiertes Laserstrahlbündel 12 zum angestrahlten Ende 4 des faseroptischen Lichtwellenleiters 2. Die Fokussierlinsenanordnung 11 besteht vorzugsweise aus einem präzisionsoptimierten Achromaten mit einem Abstand d''_{1A} von der Mitte des Strahlteilers 7 und einem Abstand d'₁ von der Stirnfläche 13 des faseroptischen Lichtwellenleiters 2, die deutlicher als in Fig. 1 in Fig. 2 zu erkennen ist, die den in Fig. 1 kreisförmig umrahmten Ausschnitt um das angestrahlte Ende 4 des Lichtwellenleiters 2 in einer etwa zwanzigfachen Vergrößerung darstellt.

Wie man in Fig. 2 erkennt, konvergiert das fokussierte Laserstrahlbündel 12 mit einem Konvergenzwinkel 2α bis zu einer engsten Stelle 14 in Gestalt einer Einschnürung und erweitert sich danach als aufgeweitetes Laserstrahlbündel 15, das sich bis zur rechtwinklig zur Faserlängsachse verlaufenden Stirnfläche 13 des angestrahlten Endes 4 des faseroptischen Lichtwellenleiters 2 erstreckt, dessen Faserdurchmesser durch einen Pfeil 16 veranschaulicht ist.

Der vom aufgeweiteten Laserstrahlbündel 15 gebildete Leuchtfleck 17 auf der Stirnfläche 13 hat einen durch einen Pfeil 18 veranschaulichten Durchmesser, der kleiner als der Durchmesser der Stirnfläche 13 des Lichtwellenleiters 2 ist.

Um die eingestrahlte Energie im Laserstrahlbündel 15 nicht zu sehr zu konzentrieren, hat die Stirnfläche 13 von der engsten Stelle 14 einen Abstand L, der so gewählt ist, daß der Durchmesser des Leuchtflecks 17 größer als der Durchmesser des Laserstrahlbündels 12 an der engsten Stelle 14 aber kleiner als der Faserdurchmesser ist. Der Abstand L kann beispielsweise so gewählt sein, daß der Durchmesser des Leuchtflecks 17 etwa die Hälfte des Durchmessers der Stirnfläche 13 des Lichtwellenleiters 2 hat, so daß sich eine gute Justierbarkeit und ein genügender Sicherheitsabstand des Randes des Leuchtflecks 17 vom Rand des Kerns des Lichtwellenleiters 2 ergibt. Beim Justiervorgang wird mit Hilfe der Haltevorrichtung 5 das in den Fig. 1 und 2 erkennbare Ende 4 des Lichtwellenleiters 2 in axialer Richtung und einer quer dazu verlaufenden Ebene verschoben.

Ein Teil des von dem Laserstrahlbündel 15 in den multimodigen faseroptischen Lichtwellenleiter 2 eingespeisten Lichtes wird am entfernten und in der Zeichnung nicht dargestellten Ende des Lichtwellenleiters 2 reflektiert und gelangt von der Innenseite des Lichtwellenleiters 2 zur Stirnfläche 13, so daß diese von der Rückseite ganz beleuchtet wird. Das auf diese Weise reflektierte und zur Beleuchtung der Stirnfläche 13 benutzte Licht entspricht etwa 4 % des eingespeisten Lichtes.

Die Fokussierlinsenanordnung 11 erzeugt bei richtiger Justierung an einer vorherbestimmten Stelle im Strahlengang ein scharfen Zwischenbild 19 der von der Rückseite beleuchteten Stirnfläche 13. Dazu wird das von der Stirnfläche 13 kommende Licht durch die Fokussierlinsenanordnung 11 bis zur Reflexionsfläche 8 des Strahlteilers 7 geführt und von dort rechtwinklig in Richtung des Bildschirmes 1 abgelenkt. Der zugeordnete Strahlengang ist in Fig. 1 durch ein Strahlenpaar 20 dargestellt und wegen des großen Abstandes d''_{1B} zwischen dem Strahlteiler 7 und dem Ort des Zwischenbildes 19 unterbrochen dargestellt. Je nach der Positionierung der Haltevorrichtung 5 verschiebt sich der Ort des Zwischenbildes 19 seitlich oder entlang der Verbindungslinie zwischen dem Strahlteiler 7 und dem Bildschirm 1.

Der vorherbestimmte Abstand des Zwischenbildes 19 vom Strahlteiler 7 ist dann gegeben, wenn sich die Stirnfläche 13 des Lichtwellenleiters 2 gegenüber der engsten Stelle 14 um den Abstand L von der Fokussierlinsenanordnung 11 weggezogen befindet. Bei einer Annäherung verschiebt sich der Ort des Zwischenbildes 19, wobei der Leuchtfleck 17 kleiner und intensiver wird. Bei einer Entfernung wird der Leuchtfleck 17 größer und das Zwischenbild 19 der Stirnfläche 13, das auch ein Zwischenbild des Leuchtfleckes 17 enthält, nähert sich dem Strahlteiler 7 und entfernt sich damit vom Bildschirm 1.

Zwischen dem vorgesehenen Ort des Zwischenbildes 19 und dem Bildschirm 1 befindet sich im Abstand d'₂ vom vorgesehenen Ort des Zwischenbildes 19 und im Abstand d''₂ vom Bildschirm 1 eine in Fig. 1 schematisch gezeichnete Abbildungslinsenanordnung 21.

Die Abbildungslinsenanordnung 21 erzeugt in der durch die Strahlenpaare 22 und 23 mit einer Unterbrechung dargestellten Weise auf dem Bildschirm 1 eine Abbildung 24 des Zwischenbildes 19 und damit des Leuchtfleckes 17 und der von der Rückseite leuchtenden Stirnfläche 13. Die Abbildung 24 enthält jedoch nur dann ein scharfes Bild der Stirnfläche 13, wenn der vorgesehene Abstand L der Stirnfläche 13 von der engsten Stelle 14 des Laserstrahls 3, 10, 12, 15 den vorgesehenen Wert hat. Auf diese Weise ist es möglich, bei festen Positionen des Bildschirmes 1, der Abbildungslinsenanordnung 21 und der Fokussierlinsenanordnung 11 nach dem Einfügen des Strahlteilers 7 und Reduzieren der Laserstrahlleistung die Positionierung des Lichtwellenleiters 2 zu überprüfen und zu justieren, wobei sowohl eine axiale als auch eine radiale genau kontrollierbare Justierung möglich sind.

Wenn der vorgesehene Abstand L nicht genau eingehalten wird, ist das erste Teilbild der Abbildung 24, nämlich das Bild der Stirnfläche 13 unscharf und das auf dem Bildschirm 1 als zweites Teilbild erkennbare Bild des Leuchtflecks 17 zu groß oder zu klein. Wenn die Stirnfläche 13 auf dem Bildschirm 1 scharf abgebildet ist, befindet sich bei richtiger Justierung das Bild des Leuchtfleckes 17 geringeren Durchmessers bezüglich dem Durchmesser des Bildes der Stirnfläche 13 konzentrisch im Bild der Stirnfläche 13. Bei radialen Fehljustierungen ist das Bild des Leuchtfleckes 17 außeraxial versetzt.

Die beschriebene Anordnung gestattet somit auf einfache Weise eine schnelle und genaue Justierung entlang den drei räumlichen Achsen, so daß Beschädigungen des Lichtwellenleiters 2 im Betrieb bei hohen Laserlichtleistungen infolge von Fehljustierungen sicher ausgeschlossen werden können.

Es ist auch möglich, die oben beschriebene Anordnung für Laserstrahlen 3 statt im Sichtbaren im UV- oder IR-Bereich zu verwenden, wenn der Bildschirm 1 für ultraviolettes oder infrarotes Licht empfindlich ist. Beispielsweise kann auch ein CCD-Chip den Bildschirm 1 ersetzen.

Die Justierung des Gesamtsystems wird durch eine einfache Berechnung gefunden, damit die Lage des Fokuspunktes am gewünschten Ort zu liegen kommt.

## Patentansprüche

1. Vorrichtung zur Justage und zur Überwachung der Position der Stirnfläche (13) eines faseroptischen Lichtwellenleiters (2) beim Einkoppeln eines Laserstrahls durch die sich senkrecht zur Längsachse des Lichtwellenleiters (2) erstreckende Stirnfläche (13) des Lichtwellenleiters (2), mit einer Strahlquelle zur Erzeugung des Laserstrahls (3), mit einer im Strahlengang des Laserstrahls angeordneten Fokussierlinsenanordnung (11), die den Laserstrahl zur Stirnfläche (13) des Lichtwellenleiters (2) führt, mit einer Halteeinrichtung in welcher der Lichtwellenleiter justierbar gehalten ist, mit einer Abbildungslinsenanordnung (21), mit einer Schirmfläche (1), und mit einem Strahlteiler (7), der einen Teil des von der Stirnfläche (13) kommenden Laserstrahls auf die Abbildungslinsenanordnung (21) umlenkt, welche die Stirnfläche (13) des Lichtwellenleiters (2) auf die Schirmfläche (1) abbildet, **dadurch gekennzeichnet,** dass nur eine Strahlquelle vorgesehen ist, und dass der Strahlteiler (7) an einer Stelle zwischen der Strahlquelle und der Fokussierlinsenanordnung (11) in den Strahlengang ein- und ausbringbar ist, an welcher er in den Strahlengang eingebracht in einem vorbestimmten Abstand (d''_{1B}) vom Strahlteiler (7) ein Zwischenbild (19) von der Stirnfläche (13) erzeugt, welches die Abbildungslinsenanordnung (21) nur dann als scharfes Bild (24) auf die Schirmfläche (1) abbildet, wenn die Stirnfläche (13) des Lichtwellenleiters (2) in Richtung des die Stirnfläche beaufschlagenden Laserstrahls (3,10,12,115) um eine vorgegebene Aufweitungslänge (L) hinter der Ebene (14) liegt, in welcher der mit Hilfe der Fokussierlinsenanordnung (11) fokussierte Laserstrahl den kleinsten Durchmesser hat.

2. Verfahren zum Justieren und Überwachen der Position der Stirnfläche eines faseroptischen Lichtwellenleiters (2) beim Einkoppeln eines Laserstrahls durch die sich senkrecht zur Längsachse des Lichtwellenleiters (2) erstreckende Stirnfläche (13), bei welchem Verfahren der von einer Strahlquelle erzeugte Laserstrahl mit Hilfe einer Fokussierlinsenanordnung (11) zur Stirnfläche (13) des Lichtwellenleiters (2) geführt wird, welche in einer Halteeinrichtung justierbar gehalten wird, und bei welchem Verfahren mit Hilfe eines im Strahlengang angeordneten Strahlteilers (7) ein Teil des von der Stirnfläche (13) des Lichtwellenleiters (2) kommenden Laserstrahls auf eine Abbildungslinsenanordnung (21) umgelenkt wird, mit deren Hilfe die Stirnfläche (13) des Lichtwellenleiters (2) auf eine Schirmfläche (1) abgebildet wird, **dadurch** **gekennzeichnet,** dass nur einer Strahlquelle vorgesehen ist, dass zunächst die Leistung des von der Strahlquelle erzeugten Laserstrahls reduziert wird und ein in den Strahlengang ein- und ausbringbarer Strahlteiler (7) zwischen der Strahlquelle und der Fokussierlinsenanordnung (11) an einer Stelle in den Strahlengang eingebracht wird, an der mit seiner Hilfe in einem vorbestimmten Abstand (d''_{1B}) vom Strahlteiler (7) ein Zwischenbild (19) von der Stirnfläche (13) erzeugt wird, welches mit Hilfe der Abbildungslinsenanordnung (21) nur dann als scharfes Bild auf die Schirmfläche (1) abgebildet wird, wenn die Stirnfläche (13) des Lichtwellenleiters (2) in Richtung des eingespeisten Laserstrahls (3,10,12,15) um eine vorgegebene Länge (L) hinter der Ebene (14) angeordnet wird, in welcher der mit Hilfe der Fokussierlinsenanordnung (11) fokussierte Laserstrahl den kleinsten Duchmesser hat.

## Claims

1. A device for adjusting and monitoring the position of the end face (13) of a fibre-optic optical waveguide (2) during injection of a laser beam through the end face (13) of the optical waveguide (2) extending at right angles to the longitudinal axis of the optical waveguide (2), having a beam source for producing the laser beam (3), a focusing lens arrangement (11) arranged in the ray path of the laser beam which guides the laser beam to the end face (13) of the optical waveguide (2), a holding means in which the optical waveguide is held adjustably, a reproducing lens arrangement (21), a screen surface (1), and a beam splitter (7) which deflects a part of the laser beam coming from the end face (13) onto the reproducing lens arrangement (21) which reproduces the end face (13) of the optical waveguide (2) on the screen surface (1), wherein only one beam source is provided, and the beam splitter (7) is arranged to be introduced into and removed from the ray path at a point between the beam source and the focusing lens arrangement (11) at which point, when introduced into the ray path, it produces at a predetermined distance (d''_{1B}) from the beam splitter (7) an intermediate image (19) of the end face (13) which the reproducing lens arrangement (21) reproduces as a sharp image (24) on the screen surface (1) only when the end face (13) of the optical waveguide (2) lies a predetermined expansion length (L) in the direction of the laser beam (3, 10, 12, 115) acting on the end face behind the plane (14) in which the laser beam focused by means of the focusing-lens arrangement (11) has its smallest diameter.

2. A method for adjusting and monitoring the position of the end face of a fibre-optic optical waveguide (2) during injection of a laser beam through the end face (13) extending at right angles to the longitudinal axis of the optical waveguide (2), in which method the laser beam produced by a beam source is guided by means of a focusing lens arrangement (11) to the end face (13) of the optical waveguide (2) which is held adjustably in a holding means, and in which method., using a beam splitter (7) arranged in the ray path, a part of the laser beam coming from the end face (13) of the optical waveguide (2) is deflected onto a reproducing lens arrangement (21), by means of which the end face (13) of the optical waveguide (2) is reproduced on a screen surface (1), wherein only one beam source is provided, wherein initially the output of the laser beam produced by the beam source is reduced and a beam splitter (7) that is arranged to be introduced into and removed from the ray path is inserted between the beam source and the focusing lens arrangement (11) at a point in the ray path at which there is produced by means of the beam splitter (7) at a predetermined distance (d''_{1B}) from the beam splitter (7), an intermediate image (19) of the end face (13), which is reproduced by means of the reproducing lens arrangement (21) on the screen surface (1) as a sharp image only when the end face (13) of the optical waveguide (2) is arranged a predetermined length (L) in the direction of the fed-in laser beam (3, 10, 12, 15) behind the plane (14) in which the laser beam focused by means of the focusing lens arrangement (11) has its smallest diameter.

## Revendications

1. Dispositif pour l'ajustement et la surveillance de la position de la face frontale (13) d'une fibre optique (guide d'ondes lumineuses de l'optique des fibres) (2) lors du couplage d'un rayon laser dans l'extrémité de la fibre optique (2) à travers sa face frontale (13), orientée perpendiculairement à l'axe longitudinal de la fibre optique (2), comprenant une source de rayonnement pour générer le rayon laser (3), un système à lentille de focalisation (11) placé dans la marche du rayon laser et amenant ce rayon à la face frontale (13) de la fibre optique (2), un dispositif de support dans lequel la fibre optique est maintenue de façon ajustable, un système à lentille de reproduction (21), une surface d'écran (1) et un séparateur de faisceau (7) qui dévie une partie du rayon laser venant de la face frontale (13) sur le système à lentille de reproduction (21), lequel reproduit la face frontale (13) de la fibre optique (2) sur la surface d'écran (1), caractérisé en ce que seulement une source de rayonnement est prévue et que le séparateur de faisceau (7) peut être introduit dans la marche de rayon et retiré de celle-ci à un endroit situé entre la source de rayonnement et le système à lentille de focalisation (11), endroit où, après avoir été introduit dans la marche du rayon, il produit, à une distance prédéterminée (d''_{1B}) du séparateur de faisceau (7), une image intermédiaire (19) de la face frontale (13), laquelle n'est reproduite comme une image nette (24) sur la surface d'écran (1) par le système à lentille de reproduction (21) que lorsque la face frontale (13) de la fibre optique (2) est située à une distance d'élargissement (L) préfixée derrière le plan (14) dans lequel le rayon laser focalisé à l'aide du système à lentille de focalisation (11) possède le plus petit diamètre, dans la direction du rayon laser (3, 10, 12, 15) illuminant la face frontale.

2. Procédé pour ajuster et surveiller la position de la face frontale d'une fibre optique (guide d'ondes lumineuses de l'optique des fibres) (2) lors du couplage d'un rayon laser dans l'extrémité de la fibre optique à travers la face frontale (13), orientée perpendiculairement à l'axe longitudinal de la fibre optique (2), procédé dans lequel le rayon laser, produit par une source de rayonnement, est guidé à l'aide d'un système à lentille de focalisation (11) jusqu'à la face frontale (13) de la fibre optique (2), laquelle est maintenue de façon ajustable dans un dispositif de support, et dans lequel, à l'aide d'un séparateur de faisceau (7) placé dans la marche du rayon laser, une partie du rayon laser venant de la face frontale (13) de la fibre optique (2) est déviée sur un système à lentille de reproduction (21), à l'aide duquel la face frontale (13) de la fibre optique est reproduite sur une surface d'écran (1), caractérisé en ce que seulement une source de rayonnement est prévue, en ce que, pour commencer, la puissance du rayon laser produit par la source de rayonnement est réduite et un séparateur de faisceau (7), susceptible d'être introduit dans la marche du rayon et sorti de celle-ci, est introduit dans la marche du rayon entre la source de rayonnement et le système à lentille de focalisation (11) à un endroit auquel, à l'aide de ce séparateur, une image intermédiaire (19) de la face frontale (13) est produite à une distance prédéterminée (d''_{1B}) du séparateur de faisceau (7), image intermédiaire qui n'est reproduite comme une image nette sur la surface d'écrant (1), à l'aide du système à lentille de reproduction (21), que lorsque la face frontale (13) de la fibre optique (2) est placée d'une distance (L) préfixée derrière le plan (14) dans lequel le rayon laser focalisé à l'aide du système à lentille de focalisation (11) possède le plus petit diamètre, dans la direction du rayon laser (3, 10, 12, 15) injecté.
